# EUROPEAN PATENT SPECIFICATION

(11) **EP 3 883 664 B1**
(45) Date of publication and mention of the grant of the patent: **23.08.2023**
(21) Application number: 19887605.4
(22) Date of filing: 19.11.2019
(51) Int. Cl.: B01D 17/00, B01D 17/02, B01D 17/04, B01D 19/00, E21B 43/00, E21B 43/34, F04F 5/02, F04F 5/16

(54) **SYSTEM AND METHOD FOR PROCESSING HYDROCARBONS**
SYSTEM UND VERFAHREN ZUR VERARBEITUNG VON KOHLENWASSERSTOFFEN
SYSTÈME ET PROCÉDÉ DE TRAITEMENT D'HYDROCARBURES

(30) Priority: 19.11.2018 NO 20181475
(43) Date of publication of application: 29.09.2021
(73) Proprietor: Straen Energy AS, 4033 Stavanger (NO)
(72) Inventor: AARSKOG, Arild, 4007 Stavanger (NO)
(74) Representative: Håmsø Patentbyrå AS
(86) International application number: PCT/NO2019/050254
(87) International publication number: WO 2020/106160

(56) References cited:
- WO-A1-2018/206850
- GB-A- 2 436 580
- GB-A- 2 436 580
- RU-C1- 2 073 123
- SU-A1- 1 611 369
- SU-A1- 1 611 369
- US-A1- 2015 267 523
- US-B1- 6 352 414

## Description

This invention relates to a system for separation of a multiphase fluid from a well stream. More particularly, the invention relates to a separation system wherein a liquid is used as a motive liquid to compress a gas separated from the multiphase fluid. The invention also relates to a method of separating a multiphase fluid from a well stream.

Over time, the oil and gas industry has developed, and improved processes related to separation of hydrocarbons. However, compression and treatment of separated gas still has a great potential with regards to reducing complexity, sizes, weights and energy consumption of the separation systems.

Patent document GB 2436580 discloses a method and a device for artificially compressing fluids in a hydrocarbon reservoir to make them rise to the surface and to operate at a prerequisite pressure. The object is achieved by using separation and compression units, for example dummy wells. The method further describes that a mixture of liquid and gas are pressurized by means of an ejector, without any further means for pressurizing the separated gas prior to extraction from the system. Another example is provided in US6352414.

The invention has for its objective to remedy or to reduce at least one of the drawbacks of the prior art, or at least provide a useful alternative to prior art. It is also an objective of the invention to provide a simplified system for pressure support of a compressed separated gas. It is a further objective of the invention to increase the overall safety related to processing of hydrocarbons. The objectives are achieved through features, which are specified in the description below and in the claims that follow.

The invention is defined by the independent patent claims. The dependent claims define advantageous embodiments of the invention.

The objectives are obtained by means of a system for compression of a gas separated from a multiphase fluid in a well stream, the multiphase fluid comprising at least liquid and gas, wherein the system comprises:
- a first module comprising at least one first separator, the first module being configured to receive the multiphase fluid and separate it into a first gas fraction and a fluid fraction comprising liquid and residual gas;
- an ejector having a first inlet, a second inlet and an outlet, wherein the outlet is coupled to the at least one first separator;
- a second separator coupled to the first module for receiving said fluid fraction and separate it into a liquid fraction and a second gas fraction, the second separator being coupled to the first inlet of the ejector for supplying the second gas fraction to the ejector;
- a pump having an inlet and an outlet, the inlet being coupled to a liquid reservoir for supplying liquid to the pump, the outlet being coupled to the second inlet of the ejector for supplying a pressurized liquid to the ejector, wherein the second gas fraction is entrained with the pressurized liquid in the ejector and supplied to the at least one first separator via the outlet of the ejector;
- a compressed gas line coupled to the at least one first separator for extracting compressed gas, wherein the gas in the at least one first separator is compressed by the pressurized liquid; and,
- whereby the outlet of the pump is also coupled directly to the at least one first separator by means of pressurized liquid line bypassing the ejector.

The invention solves the abovementioned drawbacks related to the prior art by providing a compact system for separation of a multiphase fluid from a well stream, wherein the separated gas is pressurized by means of pumping a liquid rather than using compressors.

The system has the effect that a size and complexity of the separation system may be significantly reduced, as compared to the prior art. This is essential for reducing the weight, footprint and the cost of the system if it is to be installed subsea, on a platform or on a floating vessel.

In an embodiment, the pressurized liquid is water. In an embodiment, the multiphase fluid contains at least gas, water and oil. The multiphase fluid may also comprise slugs of either gas or liquid, a slug being an accumulation or large quantity of either gas or liquid in the fluid flow.

By means of coupling the pump to the second separator, the liquid fraction can be reused to pressurize the gas. Excess liquid may be diverted to the liquid reservoir. Shortage of liquid from the second separator to the pump may be compensated for by supplying the pump with liquid from the liquid reservoir.

In an embodiment of the invention, the system further comprises a third separator arranged in the first module, wherein the separation of the multiphase fluid is carried out in the third separator, the third separator being coupled to the at least one first separator and the second separator, wherein the first gas fraction is supplied to the at least one first separator and the fluid fraction comprising liquid and residual gas is supplied to the second separator.

By means of the third separator, the multiphase fluid undergoes a first separation prior to supplying the gas fraction to the at least one first separator. Thus, the at least one first separator can hold more gas as a bulk of the multiphase fluid is separated out beforehand.

In an embodiment of the invention, the inlet of the pump is coupled to the at least one first separator for supplying liquid from the at least one first separator to the pump. As the at least one first separator is supplied with a pressurized liquid from the ejector, it will comprise liquid. This liquid is separated from the gas in the at least one first separator. By coupling the at least one first separator to the inlet of the pump, this liquid may be supplied to the pump to be reused. In an embodiment, the inlet of the pump is coupled to an external liquid reservoir in addition to the at least one first separator to supplement the liquid supply to the pump should the liquid from the at least one first separator not be sufficient to operate the pump efficiently.

The outlet of the pump is coupled to the at least one first separator for selectively supplying the at least one first separator with pressurized liquid either directly or via the ejector. By means of coupling the pump directly to the at least one first separator, the pump may be used to solely pressurise the gas already in the at least one first separator, and not via the ejector. This may for example be preferable if the desired pressure in the at least one first separator is higher than what the ejector can provide.

In an embodiment of the invention, the system further comprises a scrubber coupled to the compressed gas line. By means of the scrubber the compressed gas extracted from the first separator may be cleaned for unwanted particles or pollutants before being sent for further use. Cleaning may also be defined as removal or washing. The scrubber may be an absorber, a dry scrubber or a wet scrubber. Functionality of the scrubber is not described in detail as it is considered well known to a person skilled in the art.

In an embodiment of the invention, the system further comprises a cooler for cooling a fluid in the system. The system may comprise one or more coolers. The cooler is configured to lower the temperature of a liquid and/or a gas in the system. In one embodiment, the cooler cools the liquid supplied to the pump, thus the effect of direct cooling of the gas from the liquid during compression of the gas is enhanced. The cooler may eliminate the need for a gas cooling system. In one embodiment, the cooler cools the gas supplied to the at least one first separator. Separation in the first separator may ideally take place in the form of isothermal or close to isothermal compression, which may also require cooling of the fluid in the first separator during compression. The cooling may be enabled by the cooler described above.

In an embodiment of the invention, the first module comprises four first separators. By means of the four first separators the system may alternate between which separators that are receiving fluid, undergoing pressurization of the gas and being drained for liquid, and thus enabling the system to operate continuously, i.e. deliver a substantially constant gas pressure.

In one embodiment of the invention, the system may further include a module for de-hydrating the gas before it enters the first separator, implying that the module for de-hydrating may be placed downstream of the ejector outlet and upstream of the first separator. The module for de-hydrating the gas may be provided in the form of a triethylene glycol (TEG) contactor which removes water from the gas by physical absorption. Dehydration may be particularly useful if the export pressure, *i.e.* the pressure out from first separator is higher than a certain value, such as higher than 160 bar.

The objects of the invention is further obtained by means of a method for separating a multiphase fluid from a well stream by means of a system according to claim 1, the method comprising the steps off:
- separation of the multiphase fluid to obtain a first gas fraction and a liquid fraction containing gas;
- separation of the liquid fraction containing gas to obtain a second gas fraction and a liquid fraction;
- pumping the liquid fraction from the liquid reservoir to obtain a pressurized liquid fraction:
   - entraining the second gas fraction with the pressurized liquid fraction by means of an ejector to obtain a mixture of liquid and gas;
   - supplying said mixture to the first gas fraction;
   - pressurizing the first gas fraction by means of the pressurized liquid.

In the following is described examples of preferred embodiments illustrated in the accompanying drawings, wherein:
- Fig. 1: shows schematically a system not according to the invention;
- Fig. 2: shows schematically the system according to an embodiment of the invention;
- Fig. 3: shows schematically the system according to another embodiment of the invention;
- Fig. 4: shows schematically the system according to another embodiment of the invention

The figures are depicted in a simplified manner, and details that are not relevant to illustrate what is new with the invention may have been excluded from the figures. The different elements in the figures may necessarily not be shown in the correct scale in relation to each other. Equal reference numbers refer to equal or similar elements. In what follows, the reference numeral 1 indicates a system according to the invention.

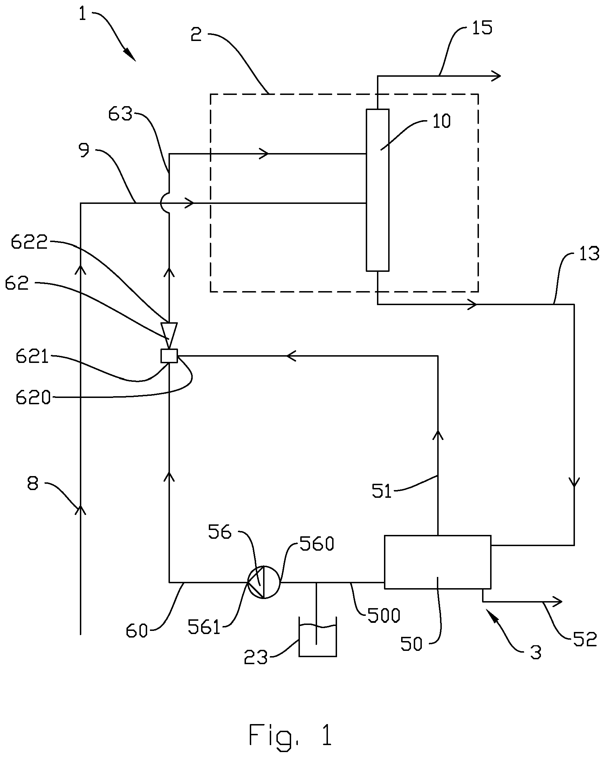

Figure 1 shows the system 1 comprising a first module 2 provided with a first separator 10. The first separator 10 may be of a conventional type utilizing gravity to separate the fluids. In one embodiment, the first separator 10 may be a vertical cylindrical separator, wherein a diameter of the cylinder is smaller than a height, for example 1 meter in diameter and 5 meter high. In another embodiment, the first separator 10 may be a pipe or a tube.

The first module 2 is coupled to the well stream 8 for receiving a multiphase fluid. The multiphase fluid is further supplied to the first separator 10. In another embodiment, as will be described below, the multiphase fluid is first supplied to another separator not shown in figure 1. The multiphase fluid is separated in a first gas fraction and a fluid fraction comprising liquid and residual gas. A fluid extraction line 13 is coupled to a lower portion of the first separator 10 for extraction of the fluid fraction. A compressed gas line 15 is coupled to an upper portion of the first separator 10 for extraction of compressed gas.

The fluid extraction line 13 connects the first separator 10 to a second separator 50. In the second separator 50 the fluid fraction is separated in a gas fraction and a liquid fraction. The second separator 50 may be any type of conventional separator, such as a dynamic separator or a static separator. A dynamic separator is a preferred embodiment for separating a fluid fraction comprising considerably larger liquid fraction than gas fraction. The dynamic separator may be of a turbo type or cyclone type, or other known types. A static separator has a less complex design than a dynamic separator and utilizes gravity for separation of the different fluids. For example, a static separator may be a tank wherein the fluids are stored, and thus separated by virtue of the density of each fluid. In one embodiment, the second separator 50 may be a combination of a dynamic and a static separator.

Figure 1 further shows the second separator 50 being coupled to a first inlet 620 of an ejector 62 via a gas extraction line 51. A liquid extraction line 52 is coupled to a lower portion of the second separator 50 for extraction of the liquid fraction, for example oil. An outlet 561 of a pump 56 is coupled to a second inlet 621 of the ejector via a pressurized liquid line 60. A liquid recycle line 500 couples the second separator 50 the an inlet 560 of the pump 56. By means of the liquid recycle line 500, a second liquid separated out from the fluid fraction in the second separator may be reused for pumping and pressurization of the gas. This liquid may also be defined as partially produced water. In one embodiment, the produced liquid is water. In one embodiment, the fluid fraction supplied to the second separator 50 is separated into a gas fraction, an oil fraction and a water fraction. The gas fraction is extracted via the gas extraction line 51, the oil fraction is extracted via the liquid extraction line 52 and the water is extracted via the liquid recycle line 500. Excess liquid (produced water) may be diverted to a liquid reservoir 23 for further treatment prior to dumping/reinjection.

The pump 56 may be any type of pump configured to pump liquids, such as a centrifugal pump or a piston pump. The pump 56 may for example be electrically, hydraulically or gas turbine driven.

The pumped liquid acts as a motive liquid in the ejector 62 for entrainment of gas from the second separator 50. The liquid is pressurized by the pump upstream of the ejector 62. In the ejector 62, the liquid is passed through a nozzle which increases a velocity and decreases a pressure of the liquid, also known as the venturi effect. At an outlet of the nozzle an area of low pressure is generated. The low pressure is less than that of a pressure of the gas in the second separator 50. Thus, the gas is sucked into the ejector 62 via the gas extraction line 51. The gas is entrained with the liquid inside the ejector 62 before a gas and liquid mixture is passed through a diffuser. The diffuser reduces the velocity and increases the pressure of the mixture. A pressurized mixture of gas and liquid is finally discharged via an outlet of the ejector 62.

A gas/liquid mixture line 63 couples the outlet 622 of the ejector 62 to the first separator 10. The gas and liquid mixture are separated in a gas fraction and a liquid fraction in the first separator 10, and the liquid increases a pressure of the gas in the first separator 10.

The liquid fraction is extracted via the fluid extraction line. In one embodiment, the liquid from the liquid reservoir is water. The liquid in the first separator 10 acts as a direct cooling medium of the gas during pressurization. This eliminates the need for additional gas cooling systems e.g. if water is injected through nozzles creating water mist for an effective heat exchange with the water molecules during compression.

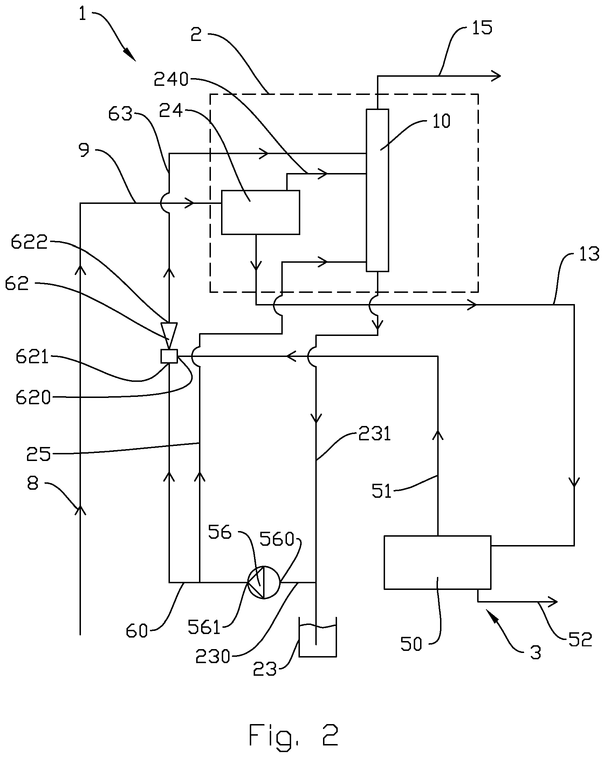

Figure 2 shows the system 1, wherein the first module 2 comprises a third separator 24. The multiphase fluid is supplied to the third separator 24 and separated into a gas fraction and a fluid fraction comprising liquid and residual gas. The gas fraction is supplied to the first separator 10 via a gas transfer line 240 coupling an upper portion of the third separator 24 and the first separator 10. In this embodiment, the fluid extraction line 13 is coupled to the third separator 24 for extraction of the fluid fraction.

Figure 2 further shows that the pump 56 is coupled to the first separator 10 via a direct pressurized liquid line 25. The direct pressurized liquid line 25 enables pumping of liquid directly to the first separator, thus bypassing the ejector 62. This embodiment allows for further increasing the pressure in the first separator. For example, gas in the first separator may reach a pressure of 50 bar by means of the ejector. By pumping liquid directly from the pump to the first separator, i.e. by-passing the ejector, the pressure can be increased to 150-200 bar. The system 1 is configured to control the routing of the liquid flow from the pump 56 to the first separator 10.

Figure 2 also shows that the first separator 10 is coupled to the inlet 560 of the pump 56 via a drain line 231. By means of the drain line 231, liquid from the first separator 10 can be supplied directly to the pump 56. Since the first separator 10 initially is supplied with liquid coming from the liquid reservoir 23, the properties of the liquid may be controlled. Thus, the liquid being extracted from the first separator 10 will not be contaminated and may be supplied to the pump 56 directly for reuse. The drain line 231 is also coupled to the liquid supply line 230 such that excess liquid may be extracted and stored in the reservoir 23. It should also be noted that in a not shown embodiment, where the system includes a TEG contactor, as disclosed above, the drive fluid in the reservoir 23 may include TEG.

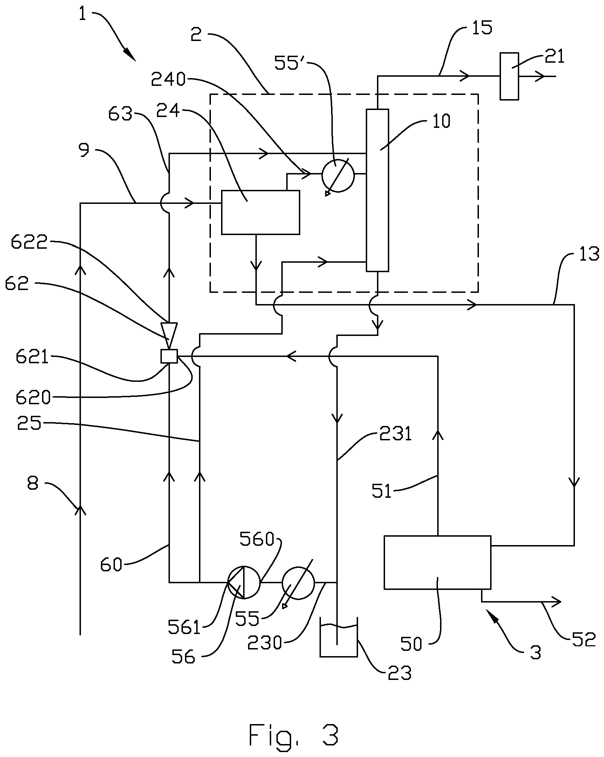

Figure 3 shows the system 1 comprising two coolers 55, 55' and a gas scrubber 21. One cooler 55 is arranged upstream of the pump 56 and is configured to reduce the temperature of the liquid supplied to the pump 56. The cooled liquid will increase the cooling of the gas in the first separator 10 during pressurization. Another cooler 55' is arranged along the gas transfer line 240 for cooling of the gas fraction from the third separator 24. The scrubber 21 is connected to the compressed gas line 15 for receiving compressed gas from the first separator 10. The scrubber 21 is configured to remove particles and condensate from the gas. The gas is extracted from the scrubber 21 and sent for export, gas lift or gas injection. Condensate from the cleaning process may be transferred to the second separator 50 via a condensation line 210 (not shown).

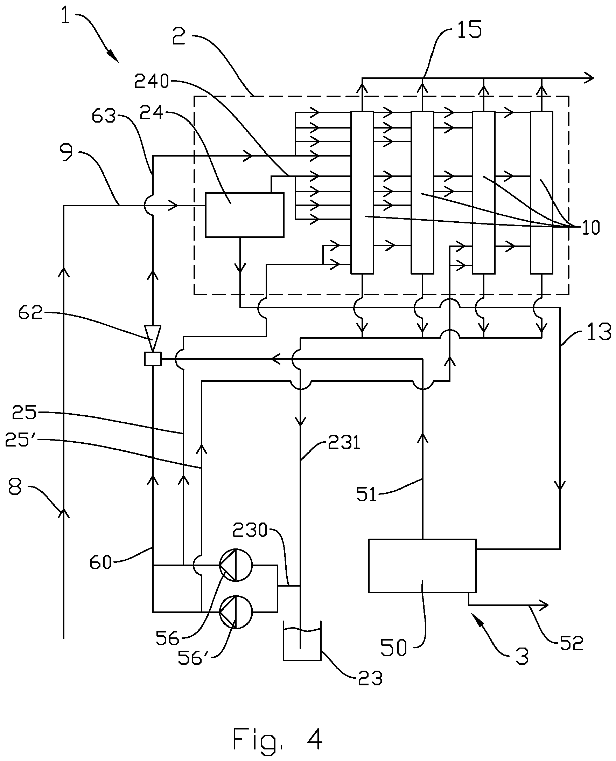

Figure 4 shows the system 1 comprising four first separators 10. Each of the four first separators 10 are coupled to gas transfer line 240 for receiving gas from the third separator 24. Each of the four first separators 10 are also coupled to the gas/liquid mixture line 63 for receiving the liquid and gas mixture from the ejector 62. Each of the four first separators 10 are further coupled to the drain line 231 for extracting liquid from the first separators 10.

Figure 4 further shows the system 1 comprising two pumps 56, 56', wherein both pumps 56, 56' are coupled to the pressurized liquid line 60 for supplying pressurized liquid to the ejector 62. Each pump 56, 56' is coupled to a direct pressurized liquid line 25, 25', wherein each of the two direct pressurized liquid line 25, 25' are coupled to two of the four first separators 10. Thus, one of the pumps 56 may pressurize the gas in a first pair of first separators 10, while the other pump 56' may pressurize the gas in a second pair of first separators 10.

For the purpose of the following description the four first separators 10 will be denoted primary, secondary, tertiary and quaternary. In operation, the first pump 56 pressurizes the gas in the primary separator and the secondary separator, whilst the second pump 56' pressurizes the gas in the tertiary separator and the quaternary separator. There is a time delay of fluid filling of the primary separator and the tertiary separator in the sense that the gas in primary separator will reach a predetermined pressure prior to the gas in the tertiary separator. The compressed gas in the primary separator is then extracted via the compressed gas line 15. Once the primary separator is emptied for the gas, the gas in the tertiary separator will be at the predetermined pressure, ready to be extracted. Thus, gas delivery may continue uninterrupted.

The second pump 56' pressurizes the gas in the tertiary and quaternary separators. There is a time delay in the fluid filling of the secondary separator and the quaternary separator, similar to that of the primary separator and tertiary separator described above. The gas in the quaternary separator will be ready for extraction once the secondary separator is emptied. The process is then repeated to obtain continuous gas extraction.

It should be noted that the sequence described above may be different in another embodiment, and the first cylinders may be controlled individually rather than in pairs. For example, a first and a second of the first separators is controlled independently of a third and a fourth of the first separators.

It should also be noted that the pressure from the well may vary in different embodiments. In some embodiments, the pressure may be in the order of 30 bar, which typically requires only one (set of) first separator(s) and one second separator as disclosed herein with reference to Figs. 1-4. In other embodiments the pressure may be lower or higher. In some (not shown) embodiments, where the pressure is higher, such as in the order of 75 bar, more second separators may be required, each second separator normally provided with appurtenant fluid tanks, motive fluids, pumps, coolers etc.

It should be noted that the above-mentioned embodiments illustrate rather than limit the invention, the invention being defined in the appended claims. In the claims, any reference signs placed between parentheses shall not be construed as limiting the claim. Use of the verb "comprise" and its conjugations does not exclude the presence of elements or steps other than those stated in a claim. The article "a" or "an" preceding an element does not exclude the presence of a plurality of such elements.

## Claims

1. A system (1) for compression of a gas separated from a multiphase fluid in a well stream (8), the multiphase fluid comprising at least liquid and gas, wherein the system (1) comprises:
- a first module (2) comprising at least one first separator (10), the first module (2) being configured to receive the multiphase fluid and separate it into a first gas fraction and a fluid fraction comprising liquid and residual gas;
- an ejector (62) having a first inlet (620), a second inlet (621) and an outlet (622), wherein the outlet (622) is coupled to the at least one first separator (10);
- a second separator (50) coupled to the first module (2) for receiving said fluid fraction and separate it into a liquid fraction and a second gas fraction, the second separator (50) being coupled to the first inlet (620) of the ejector (62) for supplying the second gas fraction to the ejector (62);
- a pump (56) having an inlet (560) and an outlet (561), the inlet (560) being coupled to a liquid reservoir (23) for supplying liquid to the pump (56), the outlet (561) being coupled to the second inlet (621) of the ejector (62) for supplying a pressurized liquid to the ejector (62), wherein the second gas fraction is entrained with the pressurized liquid in the ejector (62) and supplied to the at least one first separator (10) via the outlet (622) of the ejector wherein a compressed gas line (15) is coupled to the at least one first separator (10) for extracting compressed gas, wherein the gas in the at least one first separator (10) is compressed by the pressurized liquid from the pump (56), **characterized in that** the outlet of the pump (56) is also coupled directly to the at least one first separator (10) by means of pressurized liquid line (25) bypassing the ejector (62).

2. The system (1) according to claim 1, further comprising a third separator arranged in the first module, wherein the separation of the multiphase fluid is carried out in the third separator, the third separator being coupled to the at least one first separator (10) and the second separator (50), wherein the first gas fraction is supplied to the at least one first separator and the fluid fraction comprising liquid and residual gas is supplied to the second separator (50).

3. The system (1) according to claim 2, wherein the inlet of the pump (56) is coupled to the at least one first separator (10) for supplying liquid from the at least one first separator (10) to the pump (56).

4. The system (1) according to any of the preceding claims, further comprising a scrubber (21) coupled to the compressed gas line (15).

5. The system according to any of the preceding claims, further comprising a cooler (55) for cooling the liquid to the pump (56).

6. The system (1) according to any of the preceding claims, wherein the first module comprises four first separators (10).

7. A method for compression of a gas separated from a multiphase fluid from a well stream (8) by means of a system according to claim 1, the method comprising the steps off:
- separation of the multiphase fluid in the first module (2) to obtain a first gas fraction and a fluid fraction containing gas;
- separation of the fluid fraction containing gas to obtain a second gas fraction and a liquid fraction;
- pumping a liquid from the liquid reservoir (23) to obtain a pressurized liquid;
- entraining the second gas fraction with the pressurized liquid by means of an ejector (62) to obtain a mixture of liquid and gas;
- pumping said mixture to the first module (2) to pressurize the first gas fraction.

## Patentansprüche

1. Ein System (1) zum Verdichten eines Gases, das von einem mehrphasigen Fluid in einem Bohrlochstrom (8) abgetrennt wurde, wobei das mehrphasige Fluid mindestens eine Flüssigkeit und ein Gas umfasst, wobei das System (1) umfasst:
- ein erstes Modul (2), mindestens umfassend eine erste Abscheidevorrichtung (10), wobei das erste Modul (2) so konfiguriert ist, dass es das mehrphasige Fluid aufnimmt und es in eine erste Gasfraktion und eine Fluidfraktion, die Flüssigkeit und Restgas umfasst, trennt;
- einen Ejektor (62) mit einem ersten Einlass (620), einem zweiten Einlass (621) und einem Auslass (622), wobei der Auslass (622) mit der mindestens einen ersten Abscheidevorrichtung (10) verbunden ist;
- eine zweite Abscheidevorrichtung (50), die mit dem ersten Modul (2) verbunden ist, um die genannte Fluidfraktion aufzunehmen und sie in eine Flüssigkeitsfraktion und eine zweite Gasfraktion zu trennen, wobei die zweite Abscheidevorrichtung (50) mit dem ersten Einlass (620) des Ejektors (62) verbunden ist, um die zweite Gasfraktion dem Ejektor (62) zuzuführen;
- eine Pumpe (56) mit einem Einlass (560) und einem Auslass (561), wobei der Einlass (560) mit einem Flüssigkeitsbehälter (23) gekoppelt ist, um der Pumpe (56) Flüssigkeit zuzuführen, wobei der Auslass (561) mit dem zweiten Einlass (621) des Ejektors (62) gekoppelt ist, um dem Ejektor (62) eine unter Druck stehende Flüssigkeit zuzuführen, wobei die zweite Gasfraktion mit der Druckflüssigkeit in dem Ejektor (62) mitgerissen und über den Auslass (622) des Ejektors der mindestens einen ersten Abscheidevorrichtung (10) zugeführt wird, wobei eine Druckgasleitung (15) mit der mindestens einen ersten Abscheidevorrichtung (10) zur Entnahme von Druckgas verbunden ist, wobei das Gas in der mindestens einen ersten Abscheidevorrichtung (10) durch die Druckflüssigkeit von der Pumpe (56) komprimiert wird, **dadurch gekennzeichnet, dass** der Auslass der Pumpe (56) auch direkt mit der mindestens einen ersten Abscheidevorrichtung (10) mittels einer Druckgasleitung (25) unter Umgehung des Ejektors (62) verbunden ist.

2. Das System (1) nach Anspruch 1, ferner umfassend eine dritte Abscheidevorrichtung, die in dem ersten Modul angeordnet ist, wobei die Trennung des mehrphasigen Fluids in der dritten Abscheidevorrichtung erfolgt, wobei die dritte Abscheidevorrichtung mit der mindestens einen ersten Abscheidevorrichtung (10) und der zweiten Abscheidevorrichtung (50) gekoppelt ist, wobei die erste Gasfraktion der mindestens einen ersten Abscheidevorrichtung zugeführt wird und die Fluidfraktion, die Flüssigkeit und Restgas umfasst, der zweiten Abscheidevorrichtung (50) zugeführt wird.

3. Das System (1) nach Anspruch 2, wobei der Einlass der Pumpe (56) mit der mindestens einen ersten Abscheidevorrichtung (10) gekoppelt ist, um der Pumpe (56) Flüssigkeit von der mindestens einen ersten Abscheidevorrichtung (10) zuzuführen.

4. Das System (1) nach einem der vorangehenden Ansprüche, ferner umfassend einen Wäscher (21), der mit der Druckgasleitung (15) verbunden ist.

5. Das System nach einem der vorangehenden Ansprüche, ferner umfassend einen Kühler (55) zur Kühlung der Flüssigkeit für die Pumpe (56).

6. Das System (1) nach einem der vorangehenden Ansprüche, wobei das erste Modul vier erste Abscheidevorrichtungen (10) umfasst.

7. Ein Verfahren zum Verdichten eines Gases, das von einem mehrphasigen Fluid aus einem Bohrlochstrom (8) abgetrennt wurde, unter Verwendung eines Systems nach Anspruch 1, wobei das Verfahren die folgenden Schritte umfasst:
- Trennen des mehrphasigen Fluids im ersten Modul (2), um eine erste Gasfraktion und eine gashaltige Fluidfraktion zu erhalten;
- Trennen der gashaltigen Fluidfraktion zur Gewinnung einer zweiten Gasfraktion und einer Flüssigkeitsfraktion;
- Pumpen einer Flüssigkeit aus dem Flüssigkeitsbehälter (23), um eine unter Druck stehende Flüssigkeit zu erhalten;
- Mitreißen der zweiten Gasfraktion mit der unter Druck stehenden Flüssigkeit mittels eines Ejektors (62), um ein Gemisch aus Flüssigkeit und Gas zu erhalten;
- Pumpen des genannten Gemischs zum ersten Modul (2), um die erste Gasfraktion unter Druck zu setzen.

## Revendications

1. Un système (1) pour la compression d'un gaz séparé d'un fluide multiphasique dans un courant de puits (8), le fluide multiphasique comprenant au moins du liquide et du gaz, dans lequel le système (1) comprend :
- un premier module (2) comprenant au moins un premier séparateur (10), le premier module (2) étant configuré pour recevoir le fluide multiphasique et le séparer en une première fraction de gaz et une fraction de fluide comprenant du liquide et le gaz résiduel ;
- un éjecteur (62) disposant d'une première entrée (620), une seconde entrée (621) et une sortie (622), dans lequel la sortie (622) est accouplée au premier au moins un séparateur(10) ;
- un second séparateur (50) accouplé au premier module (2) pour recevoir ladite fraction de fluide et la séparer en une fraction de liquide et une seconde fraction de gaz, le second séparateur (50) étant accouplé à la première entrée (620) de l'éjecteur (62) pour fournir la seconde fraction de gaz à l'éjecteur (62) ;
- une pompe (56) disposant d'une entrée (560) et d'une sortie (561), l'entrée (560) étant accouplée à un réservoir liquide (23) pour fournir du liquide à la pompe (56), la sortie (561) étant accouplée à la seconde entrée (621) de l'éjecteur (62) pour fournir un liquide sous pression à l'éjecteur (62), dans lequel la seconde fraction de gaz est entraînée avec le liquide sous pression dans l'éjecteur (62) et fournie au premier au moins un séparateur (10) à travers la sortie (622) de l'éjecteur dans lequel une conduite de gaz comprimé (15) est accouplée au premier au moins un séparateur (10) pour extraire du gaz comprimé, dans lequel le gaz dans le premier au moins un séparateur (10) est comprimé par le liquide sous pression de la pompe (56) **caractérisé en ce que** la sortie de la pompe (56) est également accouplée directement au premier au moins un séparateur (10) à travers une conduite de liquide sous pression (25) contournant l'éjecteur (62).

2. Le système (1) selon la revendication 1, comprenant également un troisième séparateur arrangé dans le premier module, dans lequel la séparation du fluide multiphasique est exécutée dans le troisième séparateur, le troisième séparateur étant accouplé au premier au moins un séparateur (10) et au second séparateur (50), dans lequel la première fraction de gaz est fournie au premier au moins un séparateur et la fraction de fluide comprenant du liquide et le gaz résiduel est fournie au second séparateur (50).

3. Le système (1) selon la revendication 2, dans lequel l'entrée de la pompe (56) est accouplée au premier au moins un séparateur (10) pour fournir du liquide venant du premier au moins un séparateur (10) vers la pompe (56).

4. Le système (1) selon l'une quelconque des revendications précédentes, comprenant également un épurateur (21) accouplé à la conduite de gaz comprimé (15).

5. Le système selon l'une quelconque des revendications précédentes, comprenant également un refroidisseur (55) pour refroidir le liquide allant vers la pompe (56).

6. Le système (1) selon l'une quelconque des revendications précédentes, dans lequel le premier module comprend quatre premiers séparateurs (10).

7. Un procédé de compression d'un gaz séparé d'un fluide multiphasique issu d'un courant de puits (8) à travers un système selon la revendication 1, le procédé comprenant les étapes de :
- séparation du fluide multiphasique dans le premier module (2) pour obtenir une première fraction de gaz et une fraction de fluide contenant du gaz ;
- séparation de la fraction de fluide contenant du gaz pour obtenir une seconde fraction de gaz et une fraction liquide ;
- pomper un liquide à partir du réservoir de liquide (23) pour obtenir un liquide sous pression ;
- entraîner la seconde fraction de gaz avec le liquide sous pression à travers un éjecteur (62) pour obtenir un mélange de liquide et de gaz ;
- pomper ledit mélange dans le premier module (2) pour mettre sous pression la première fraction de gaz.
